# EUROPÄISCHE PATENTANMELDUNG

(11) **EP 4 738 100 A1**
(43) Veröffentlichungstag der Anmeldung: **06.05.2026**
(21) Anmeldenummer: 25193037.6
(22) Anmeldetag: 31.07.2025
(51) Int. Cl.: G06F 8/35, G06F 8/36, G06F 8/71, G05B 19/02, G06F 8/34, G06F 8/41

(54) **COMPUTERIMPLEMENTIERTES VERFAHREN ZUM GENERIEREN EINES STEUERUNGSPROGRAMMES FÜR EINE ZIELPLATTFORM, VERFAHREN ZUM KONFIGURIEREN EINER ALS STEUERGERÄT AUSGESTALTETEN ZIELPLATTFORM, VORRICHTUNG ZUR DATENVERARBEITUNG, COMPUTERPROGRAMMPRODUKT UND DATENTRÄGER**

(30) Priorität: 29.10.2024 DE 102024131471
(71) Anmelder: dSPACE SE & Co. KG, 33102 Paderborn (DE)
(72) Erfinder: Mair, Michael, 33102 Paderborn (DE); Hillebrand, Sebastian, 33102 Paderborn (DE); Hein, Renate, 33102 Paderborn (DE)

(57) **Zusammenfassung**

Die Erfindung betrifft ein computerimplementiertes Verfahren zum Generieren eines Steuerungsprogrammes (14) für eine Zielplattform (ES) aus einem graphischen Steuerungsmodell (12) einer Entwicklungsplattform, wobei das graphische Steuerungsmodell (12) ein Blockdiagramm mit einer Mehrzahl von Blöcken (16, 18, 20, 22) umfasst, wobei das graphische Steuerungsmodell (12) auf eine Definitionsdatenbank (DDT) referenziert, in der Informationen zum graphischen Steuerungsmodell (12) gespeichert sind, wobei die Definitionsdatenbank (DDT) wenigstens ein Zielspezifizierungsobjekt (26) umfasst, wobei das Zielspezifizierungsobjekt (26) zielplattformspezifische Generierungsregeln für das Steuerungsprogramm (14) umfasst, das Zielspezifizierungsobjekt (26) von einem oder mehreren Blöcken (20) des graphischen Steuerungsmodells (12) referenziert wird, und beim Erzeugen des Steuerungsprogrammes (14) die zielplattformspezifischen Generierungsregeln für Steuerungsprogrammanteile, die zu denjenigen Blöcken (20) korrespondieren, die auf das Zielspezifizierungsobjekt (26) referenzieren, berücksichtigt werden.

Weiterhin betrifft die Erfindung eine Vorrichtung zur Datenverarbeitung (10) umfassend Mittel zur Ausführung des obigen Verfahrens, ein Computerprogrammprodukt und einen entsprechenden computerlesbaren Datenträger.

## Beschreibung

Die Erfindung betrifft ein computerimplementiertes Verfahren zum Generieren eines Steuerungsprogrammes für eine Zielplattform aus einem graphischen Steuerungsmodell einer Entwicklungsplattform.

Zudem betrifft die Erfindung ein Verfahren zum Konfigurieren einer als Steuergerät ausgestalteten Zielplattform, bei dem ein Steuerungsprogramm für die Zielplattform aus einem eingelesenen graphischen Steuerungsmodell nach dem obigen Verfahren erzeugt wird.

Zudem betrifft die Erfindung eine Vorrichtung zur Datenverarbeitung umfassend Mittel zur Ausführung des obigen Verfahrens.

Weiterhin betrifft die Erfindung ein Computerprogrammprodukt, umfassend Befehle, die bei der Ausführung des Programms durch einen Computer diesen veranlassen, das obige Verfahren auszuführen.

Ferner betrifft die Erfindung einen computerlesbaren Datenträger, auf dem das obige Computerprogrammprodukt gespeichert ist.

Verfahren zur computergestützten Erzeugung eines Steuerungsprogramms aus einem graphischen Steuerungsmodell sind seit längerem bekannt und gehören zu den grundlegenden Funktionalitäten von Entwicklungsumgebungen. Insbesondere lassen sich derart Programmen für Steuerungssysteme wie beispielsweise Steuergeräte erstellen.

Das graphische Steuerungsmodell liegt oft in Form eines Blockschaltbildes vor, mit dessen Hilfe beispielsweise die mathematische Funktionalität eines Regelungsalgorithmus modelliert und dargestellt werden. Mittels des graphischen Steuerungsmodelles können Prozesse, Regler und/oder allgemein das Verhalten des Steuergeräts zunächst simuliert und das Vorliegen von gewünschten Eigenschaften überprüft werden. Das das Modell bildende Blockdiagramm umfasst in der Regel mehrere über Signallinien verbundene Blöcke, die Operationen wie Berechnungen ausführen, wobei ein Block beispielsweise aus mehreren Eingangssignalen ein Ausgangssignal berechnen kann. Über die Signallinien oder auch mittels für das graphische Steuermodell global erreichbaren Speicherbereichen lassen sich Signale unterschiedlicher Signalarten zwischen den Blöcken übertragen.

In der Regel werden Blockdiagramme zyklisch ausgeführt, wobei alle Blöcke dauerhaft im Speicher gehalten werden und jeder Block einmal pro Zeitschritt ausgeführt wird. Insbesondere kann ein Block auf Eingangssignale aus dem letzten Zeitschritt eine oder mehrere Operationen anwenden, um Ausgangssignale des aktuellen Zeitschrittes zu erzeugen. Entsprechend sind übliche Annahmen in Bezug zu Steuerungsprogrammen, wie beispielsweise einer Lebensdauer von Variablen des Steuerungsprogramms nicht ohne weiteres auf das graphische Steuerungsmodell übertragbar.

Graphische Steuerungsmodell können neben einem zyklisch ausgeführten Teilmodell zur Beschreibung näherungsweise zeitkontinuierlichen Verhaltens des Steuergerätes auch ein Teilmodell zur Beschreibung eines diskreten Verhaltens umfassen, in dem eine Anzahl von Zuständen und Übergangsbedingungen definiert sind.

Verfahren zum Erzeugen von Steuerungsprogrammen aus graphischen Steuerungsmodellen werden auch als Codegeneratoren bezeichnet. Dabei handelt es sich um ein Computerprogramm, das das graphische Steuerungsmodell in Quellcode der gewählten Zielplattform - sprich in das Steuerungsprogramm - übersetzt. Das Steuerungsprogramm liegt im Gegensatz zum graphischen Steuerungsmodell in vollständig textueller Form vor und umfasst Instruktionen zur Ausführung auf der Zielplattform. Codegeneratoren gewährleisten somit eine sichere und fehlerfreie Implementierung einer abstrakten Funktionsbeschreibung (graphisches Steuerungsmodell) in ein Programm für die Zielplattform (Steuerungssystem).

Ein übliches Vorgehen der Codeerzeugung besteht darin, dass für jeden Ausgang eines Blocks eine Variable im Quellcode erzeugt wird. Allerdings hat dies den Nachteil, dass in der Regel dabei zunächst mehr Variablen entstehen, als wirklich erforderlich sind. Durch eine anschließende Optimierung kann die Anzahl von Variablen bzw. allgemein die Codegröße verringert werden. So ist es aus der EP 2 418 577 A1 bekannt, ein Blockdiagramm in eine Zwischendarstellung zu transformieren und auf diese Zwischendarstellung mindestens eine Optimierung anzuwenden, um eine optimierte Zwischendarstellung zu erzeugen. Eine Vielzahl an weiteren Optimierungen, die an sich aus dem Compilerbau bekannt sind, kann nacheinander angewandt werden, um weiter optimierte Zwischendarstellungen zu erzeugen. Anschließend wird aus der optimierten Zwischendarstellung das Steuerungsprogramm, bevorzugt in C-Code erzeugt. Ein Verfahren zum Erzeugen eines Steuerungsprogrammes ist beispielsweise in der Druckschrift DE 10 2020 124 080 A1 oder der Druckschrift EP 2 916 183 B1 beschrieben.

Komplexe Steuerungsprogramme oder Bestandteile davon, wie etwa Quellcode, der künstliche neuronale Netze verwendet, greifen in der Regel auf Programmbibliotheken zurück, um Berechnungen durchzuführen. Programmbibliotheken sind im Gegensatz zum Steuerungsprogramm keine eigenständig lauffähigen Einheiten, sondern sie enthalten Hilfsmodule und/oder Bestandteile, die vom Steuerungsprogramm angefordert werden. Programmbibliotheken können vom Steuerungsprogramm zu unterschiedlichen Zeitpunkten benutzt werden, beispielsweise vor der Laufzeit des Steuerungsprogramms bei der Kompilierung, während der Laufzeit des Steuerungsprogrammes, und/oder bei der Just-in-time-Kompilierung, um das Steuerungsprogramm oder Bestanteile davon zur Laufzeit in für die für eine Recheneinheit der Zielplattform ausführbaren Codes zu übersetzen. Weiterhin besteht bei komplexen Steuerungsprogramme Bedarf von sogenannten Bare-Metal-Programmierlösungen Gebrauch zu machen, bei denen die Programmierung auf Hardwareebene der Zielplattform abläuft, so dass das Steuerungsprogramm oder Teile davon ohne die Abstraktionsschicht eines Betriebssystems auskommt.

Entsprechend weisen komplexe Steuerungsprogramme erhebliche Abhängigkeiten zu den Software- und Hardwarebasierten Eigenheiten der Zielplattform auf, so dass ein Wechsel der Zielplattform für komplexe Steuerungsprogramme, die aus einem graphischen Steuerungsmodell erzeugt werden, sehr aufwändig ist, was die Entwicklung und Testung von Steuerungsprogrammen erschwert. Insbesondere liegt die Umsetzung der Berechnung durch Einbinden von Bibliotheken und/oder die Umsetzung der Berechnung über Bare-Metal-Programmierlösungen in der Regel außerhalb des durch den Codegeneratoren erzeugten Quellcodes.

Um eine gute Gesamtperformance des Steuergerätes zu ermöglichen, ist es zudem wünschenswert, dass spezifische Hardwarekonfigurationen der Zielplattform berücksichtigt werden können. Beispielsweise bieten spezielle Vektorprozessoren die Möglichkeit, Berechnungen auf gleichartigen Daten gleichzeitig in einem Vektor auszuführen. Architekturen mit speziellen Maschinenanweisungen für Vektoren benötigen zur Nutzung dieser aus höheren Programmiersprachen wie dem Steuerungsprogramm allerdings eine Unterstützung beispielsweise durch Spracherweiterungen für die Generierung von Array-Funktionen. Deswegen können diese Funktionalitäten in der Regel nur verwendet werden, wenn bei Erstellung des Steuerungsprogrammes auch die Architektur der Zielplattform bekannt ist und eine explizite Modellierung stattfindet. Bei einer expliziten Modellierung fallen aber die wesentlichen Vorteile einer modellbasierten Entwicklung über das graphische Steuerungsmodell weg.

Davon ausgehend ist es die Aufgabe der Erfindung, Maßnahmen anzugeben, um die Anpassbarkeit des Erzeugens eines Steuerungsprogrammen aus einem graphischen Steuerungsmodell an unterschiedliche Zielplattformen und/oder an Eigenheiten der Zielplattform zu verbessern.

Diese Aufgabe wird durch den Gegenstand der Hauptansprüche gelöst. Bevorzugte Weiterbildungen finden sich in den Unteransprüchen.

Erfindungsgemäß wird also computerimplementiertes Verfahren zum Generieren eines Steuerungsprogrammes für eine Zielplattform aus einem graphischen Steuerungsmodell einer Entwicklungsplattform bereitgestellt, wobei das graphische Steuerungsmodell ein Blockdiagramm mit einer Mehrzahl von Blöcken umfasst, wobei das graphische Steuerungsmodell auf eine Definitionsdatenbank referenziert, in der Informationen zum graphischen Steuerungsmodell gespeichert sind, und wobei die Definitionsdatenbank wenigstens ein Zielspezifizierungsobj ekt umfasst. Dabei ist insbesondere vorgesehen, dass das Zielspezifizierungsobjekt zielplattformspezifische Generierungsregeln für das Steuerungsprogramm umfasst, das Zielspezifizierungsobjekt von einem oder mehreren Blöcken des graphischen Steuerungsmodells referenziert wird, und beim Erzeugen des Steuerungsprogrammes die zielplattformspezifischen Generierungsregeln für Steuerungsprogrammanteile, die zu denjenigen Blöcken korrespondieren, die auf das Zielspezifizierungsobjekt referenzieren, berücksichtigt werden.

Das erfindungsgemäße Verfahren nutzt also das in der Definitionsdatenbank vorhandene Zielspezifizierungsobj ekt, um beim Erzeugen des Steuerungsprogrammes zielplattformspezifische Generierungsregeln für jene Anteile des Steuerungsprogrammes zu berücksichtigen, die zu den Blöcken korrespondieren, die im graphischen Steuerungsmodell auf das Zielspezifizierungsobjekt referenzieren.

Dies erlaubt somit die Spezifikation von zielplattformspezifischen Umsetzungsvarianten des Steuerungsprogrammes zu berücksichtigen. Insbesondere können dadurch auch zielplattformspezifische Eigenheiten und Abhängigkeiten beim Erstellungsprozess des Steuerungsprogrammes berücksichtigt werden. Unter dem Erstellungsprozess - auch Build-Prozess genannt - wird bevorzugt jener Vorgang verstanden, bei dem für eine Recheneinheit der Zielplattform ausführbarer Code automatisiert erzeugt wird und insbesondere die Kompilierung und/oder das Linken des ausführbaren Codes an Programmbibliotheken stattfindet. Dadurch dass zielplattformspezifische Generierungsregeln für jene Anteile des Steuerungsprogrammes berücksichtigt werden, die zu denjenigen Blöcken korrespondieren, die im graphischen Steuerungsmodell auf das Zielspezifizierungsobjekt referenzieren, wird auch berücksichtigt, dass bestimmte Abhängigkeiten lediglich mit bestimmten Blöcken assoziiert sind.

Weiterhin ist es mittels des vorliegenden Verfahrens möglich, dass ausgehend vom graphischen Steuerungsmodell das Steuerungsprogramm ohne Umwege über das graphische Steuerungsmodell korrekt für eine spezifische Zielplattform generiert wird. Bevorzugt ist es zum Erzeugen des Steuerungsprogrammes nicht notwendig, dass Modellanteile von Blöcken, bei denen zielplattformspezifische Eigenheiten zu berücksichtigen sind, zunächst in ein Subsystem des graphischen Steuerungsmodells ausgelagert werden, gemäß den spezifischen Erfordernissen der Zielplattform umgesetzt werden, und in einem anderen Subsystem des graphischen Steuerungsmodells als externer Code wieder in das graphische Steuerungsmodell eingebunden werden. Stattdessen kann programmatisch die Wunschausprägung des Steuerungsprogramms über das Zielspezifizierungsobjekt für die entsprechenden Blöcke des graphischen Steuerungsmodelles vorgegeben werden. Weiter bevorzugt ist es mit dem vorliegenden Verfahren möglich, dass ausgehend vom graphischen Steuerungsmodell ein Steuerungsprogramm erzeugt wird, das zielplattformspezifische Abhängigkeiten berücksichtigt, ohne dass dafür direkt im erzeugten Steuerungsprogramm für die entsprechende Zielplattform spezifische Aufrufe von Programmbibliotheken vorhanden sind. Stattdessen wird im erzeugten Steuerungsprogramm auf das die zielplattformspezifischen Generierungsregeln umfassende Zielspezifizierungsobjekt referenziert.

Das Blockdiagramm des graphischen Steuerungsmodelles umfasst mehrere Blöcke. Bevorzugt ist das Blockdiagramm dazu ausgestaltet, Signale zwischen wenigstens zwei Blöcken weiterzugeben. Hierfür kann vorgesehen sein, dass ein erster Block ein Ausgangssignal, das je nach Definition aus einem Wert oder mehrere zusammengehörigen Werten bestehen kann, ausgibt und ein zweiter Block dieses Signal als sein Eingangssignal empfängt und das Signal bei der Ermittlung seines Ausgangssignals berücksichtigt. Die Weitergabe des Signals kann über Signallinien, die die Blöcke miteinander verbinden oder über für das Steuerungsmodell global erreichbare Speicherbereiche erfolgen, so dass auch Signale zwischen nicht direkt über Signallinien verbundene Blöcke weitergegeben werden können.

Die Blöcke in dem Blockdiagramm können atomar sein, also aus Sicht der umgebenden Blöcke eine Einheit bilden, bei der zu Beginn eines Rechenschritts alle Eingangssignale anliegen müssen und zum Ende eines Rechenschritts alle Ausgangssignale vorhanden sind. Wenn Blockdiagramme hierarchisch sind, kann eine Vielzahl von Blöcken in einer untergeordneten Ebene den Aufbau eines Blocks in einer übergeordneten Ebene beschreiben. Hierarchische bzw. zusammengesetzte Blöcke, auch wenn diese atomar sind, können eine Vielzahl von Blöcken in einer untergeordneten Ebene umfassen.

Das graphische Steuerungsmodell referenziert auf die Definitionsdatenbank, in der Informationen zum graphischen Steuerungsmodell gespeichert sind. Insbesondere umfasst die Definitionsdatenbank das Zielspezifizierungsobjekt zum Spezifizieren der zielplattformspezifischen Generierungsregeln für das Steuerungsprogramm. Insbesondere ist die Definitionsdatenbank derart ausgeführt, dass sie erlaubt zielplattformspezifische Abhängigkeiten und/oder zielplattformspezifische Anweisungen für unterschiedliche Zielplattformen zu bündeln. Da zudem von einem oder mehreren Blöcken des graphischen Steuerungsmodells auf das Zielspezifizierungsobjekt referenziert wird, ist zudem sichergestellt, dass die Definitionsdatenbank derart ausgeführt, dass sie ermöglicht zielplattformspezifische Abhängigkeiten und/oder zielplattformspezifische Anweisungen in einzelnen Blöcken zu verorten. Die Definitionsdatenbank kann beispielsweise eine Baumstruktur aufweisen. Weiter bevorzugt ist vorgesehen, dass das Zielspezifizierungsobj ekt auch Standard-Generierungsregeln für das Steuerungsprogramm umfasst, die beim Erzeugen des Steuerungsprogrammes als Default berücksichtigt werden, insbesondere für Situationen, wenn nutzerseitig keine Zielplattform vorgegeben wird.

Beim Ermitteln des Steuerungsprogramms aus dem graphischen Steuerungsmodell wird bevorzugt in einem mehrstufigen Prozess das Steuerungsprogramm generiert. Bei diesem Prozess wird bevorzugt auf die in der Definitionsdatenbank hinterlegten Informationen, und besonders bevorzugt auf das Zielspezifizierungsobjekt, zurückgegriffen. Das Steuerungsprogramm - auch Quellcode genannt - liegt bevorzugt in vollständig textueller Form vor und umfasst bevorzugt Instruktionen für die bevorzugt als Steuergerät ausgestaltete Zielplattform.

Gemäß einer bevorzugten Weiterbildung der Erfindung ist vorgesehen, dass die zielplattformspezifischen Generierungsregeln für das Steuerungsprogramm Eigenheiten einer Steuerungsprogrammsprache, einer Hardware der Zielplattform, einer Hardwareeinstellung der Zielplattform, einer Laufzeitumgebung der Zielplattform, eines Compilers zum Erzeugen eines für eine Recheneinheit der Zielplattform ausführbaren Codes aus dem Steuerungsprogramm, einer Compilerversion, und/oder einer Compilereinstellung berücksichtigen.

Über das Zielspezifizierungsobjekt können bevorzugt unterschiedliche die Zielplattform betreffende Eigenheiten wie Steuerungsprogrammsprache, Hardware, Hardwareeinstellungen, Laufzeitumgebung, Compiler, Compilerversion und/oder Compilereinstellung berücksichtigt werden und derart diese Eigenheiten berücksichtigende Umsetzungsvarianten des Steuerungsprogrammes spezifiziert werden. Somit lassen sich in anderen Worten also bevorzugt unterschiedliche Umsetzungsvarianten des Steuerungsprogrammes für unterschiedliche Zielplattformen im Zielspezifizierungsobjekt spezifizieren.

Die Laufzeitumgebung der Zielplattform umfasst bevorzugt alle zur Laufzeit des Steuerungsprogrammes verfügbaren und festgelegten Voraussetzungen des Laufzeitsystems der Zielplattform. Das Laufzeitsystem ist bevorzugt durch die elementaren Bestandteile der Steuerungsprogrammsprache wie beispielsweise das Verhalten von Sprachkonstrukten und weiteren Funktionen wie Typprüfung, Debugging, und/oder Erzeugen von für die Zielplattform ausführbaren Codes und bevorzugt dessen Optimierung definiert. Die Laufzeitumgebung umfasst bevorzugt weiterhin die vom Steuerungsprogramm angeforderten Programmbibliotheken, wie Laufzeitbibliothek und/oder Standardbibliotheken, Programmierschnittstellen, Laufzeitvariablen und/oder Zugriffe auf Hardwarekomponenten und/oder Softwarekomponenten der Zielplattform.

Üblicherweise bietet ein Compiler Optionen für verschiedene Optimierungen mit dem Ziel, die Laufzeit des für Recheneinheit der Zielplattform ausführbaren Codes zu verbessern oder dessen Speicherplatzbedarf zu minimieren. Die Optimierungen kann beispielsweise in Abhängigkeit von den Eigenschaften der Hardware der Zielplattform, zum Beispiel wie viele und welche Register der Prozessor des Steuergerätes zur Verfügung stellt, erfolgten. Bevorzugt ist auch vorgesehen, dass im Zielspezifizierungsobjekt Umsetzungsvarianten des Steuerungsprogrammes spezifiziert werden können, um Eigenheiten des Compilers, der Compilerversion, und/oder der Compilereinstellung zu berücksichtigen.

Bevorzugt kann beispielsweise über das Zielspezifizierungsobjekt die Verwaltung der durch Einbindungen von Programmbibliotheken vorhandenen Abhängigkeiten, vereinfacht werden. So kann beispielsweise im Zielspezifizierungsobjekt eine entsprechende Umsetzungsvariante des Steuerungsprogrammes spezifiziert werden, um Quell-Objekte und/oder Einbindungen von Programmbibliotheken zu erzeugen. Weiterhin können Suchpfade oder Build-Einstellungen wie Compiler- oder Linkerschalter im Zielspezifizierungsobjekt spezifiziert werden. Zudem ist es weiter bevorzugt möglich, Build-Abhängigkeiten für nachgeordnete Hardware wie etwa Ko-prozessoren und/oder FPGAs (*Field Programmable Gate Array*)*,* Build-Beschreibungen für die Erzeugung von Wrappercode über das Zielspezifizierungsobjekt zu spezifizieren. Weiterhin bietet das Zielspezifizierungsobjekt bevorzugt die Möglichkeit Umsetzungsvariante des Steuerungsprogrammes für die Ansteuerung von Services für Service-basierte Architekturen der Zielplattform und/oder für die Abstraktionen für Anwendungsprogrammier-Schnittstellen (API, *Application Programming Interface*), über das Zielspezifizierungsobjekt zu spezifizieren. Eine Anwendungsprogrammier-Schnittstelle ist ein Programmteil, der von einem Softwaresystem anderen Programmen zur Anbindung an das System zur Verfügung gestellt wird. Eine API kann beispielsweise den Zugriff auf Hardware der Zielplattform wie beispielsweise den Speicher oder Prozessor ermöglichen oder vereinfachen. Weiter bevorzugt ist es möglich, Build-Beschreibungen für die Erzeugung von Wrappercode zur Einbettung der Services in entsprechenden Service basierten Architekturen und/oder Build-Beschreibungen für die Breitstellung solcher Services über das Zielspezifizierungsobjekt zu spezifizieren.

In anderen Worten ermöglicht das Zielspezifizierungsobjekt also bevorzugt Build-Abhängigkeiten und Build-Anweisungen für unterschiedliche Zielplattformen zu bündeln und in einzelnen Blöcken des graphischen Steuerungsmodelles zu verorten.

Gemäß einer weiteren bevorzugten Weiterbildung der Erfindung ist vorgesehen, dass der auf das Zielspezifizierungsobjekt referenzierende Block des graphischen Steuerungsmodells eine Signalverarbeitung durchführt, dessen Ergebnis von wenigstens einem anderen Block im graphischen Steuerungsmodell verwendet wird, und dass beim Erzeugen des Steuerungsprogrammes das Steuerungsprogramm in der Form generiert wird, dass ein zur Ergebnisweitergabe korrespondierender Funktionsprototyp unabhängig von der zielplattformspezifischen Ausprägung desjenigen Anteils des Steuerungsprogrammes ist, der zu dem auf das Zielspezifizierungsobjekt referenzierenden Block korrespondiert.

Der Funktionsprototyp bezeichnet bevorzugt die Deklaration einer Funktion des Steuerungsprogrammes - weiter bevorzugt inklusive Angaben über Anzahl und Typ der Parameter der Funktion und des Datentyps des Rückgabewertes. Durch den Funktionsprototypen wird also die Schnittstelle der Funktion zu anderen Funktionen des Steuerungsprogrammes spezifiziert. In anderen Worten ist also bevorzugt vorgesehen, dass die Schnittstelle von jener Funktion, die eine zielplattformspezifische Ausprägung aufweist, unabhängig von der zielplattformspezifischen Ausprägung ist. Noch anders formuliert, ist bevorzugt die Schnittstelle der Funktion trotz zielplattformspezifischer Ausprägung der Funktion für alle möglichen zielplattformspezifischen Ausprägungen gleichbleibend. Da also die Funktionsschnittstelle zur Umgebung bevorzugt stabil ist, ist ein Austausch der Umsetzung auch lokal begrenzt. Entsprechend ist ein einfaches Durchspielen von mehreren zielplattformspezifischen Umsetzungsvarianten des Steuerungsprogrammes beispielsweise im Sinne einer *profile-guided optimization* möglich, um beispielsweise bei begrenzten Ressourcen die bestmögliche Konfiguration zu finden. Beispielsweise kann bei der *profile-guided optimization* festgestellt werden, dass die Ausführung gewisser Bestandteile des Steuerungsprogrammes auf einen Ko-Prozessor ausgelagert werden sollen, um Eigenheiten der Hardware der Zielplattform zu berücksichtigen. Das Verfahren hat also den Vorteil, dass eine Variation der zielplattformspezifischen Umsetzung bei gleichbleibender Modellierung im graphischen Steuermodell und gleichbleibender Schnittstelle auf Ebene des erzeugten Steuerungsprogrammes möglich ist.

In diesem Zusammenhang ist gemäß einer weiteren Weiterbildung der Erfindung vorgesehen, dass der auf das Zielspezifizierungsobjekt referenzierende Block des graphischen Steuerungsmodells ein Signal wenigstens an einen andere Block weiterleitet, und dass beim Erzeugen des Steuerungsprogrammes das Steuerungsprogramm in der Form generiert wird, dass eine Angabe über einen Rückgabewert der Funktion im Funktionsprototyp unabhängig von der zielplattformspezifischen Ausprägung desjenigen Anteils des Steuerungsprogrammes ist, der zu dem auf das Zielspezifizierungsobjekt referenzierenden Block korrespondiert. Da der Rückgabewert der Funktion trotz zielplattformspezifischer Ausprägung der Funktion gleichbleibend ist, ist bei einem Wechsel der Zielplattform keine Anpassung von weiteren Funktionen des Steuerungsprogrammes notwendig, die den Rückgabewert der Funktion weiterverwenden.

Weiterhin ist in diesem Zusammenhang gemäß einer weiteren Weiterbildung der Erfindung vorgesehen, dass der auf das Zielspezifizierungsobjekt referenzierende Block des graphischen Steuerungsmodells wenigstens ein Signal empfängt, und dass beim Erzeugen des Steuerungsprogrammes das Steuerungsprogramm in der Form generiert wird, dass eine Angabe über Funktionsparameter im Funktionsprototyp unabhängig von der zielplattformspezifischen Ausprägung desjenigen Anteils des Steuerungsprogrammes ist, der zu dem auf das Zielspezifizierungsobjekt referenzierenden Block korrespondiert. Da die Angabe über die Funktionsparameter, und bevorzugt die Angaben über Anzahl und Datentyp der Funktionsparameter, trotz zielplattformspezifischer Ausprägung der Funktion gleichbleibend ist, ist bei einem Wechsel der Zielplattform keine Anpassung von weiteren Funktionen, die die an die Eigenheiten der Zielplattform angepasste Funktion aufrufen, notwendig.

Gemäß einer weiteren bevorzugten Weiterbildung der Erfindung ist vorgesehen, dass das Blockdiagramm hierarchisch aufgebaut ist und mindestens ein erstes Subsystem und ein zweites Subsystem umfasst, wobei das erste Subsystem ein äußeres Subsystem ist, derart dass das zweite Subsystem von dem ersten Subsystem umfasst wird, wobei das zweite Subsystem wenigstens einen Block umfasst, der auf das Zielspezifizierungsobjekt referenziert, und wobei beim Erzeugen des Steuerungsprogrammes für die Zielplattform das Steuerungsprogramm in der Form generiert wird, dass das Referenzieren hierarchisch von dem zum zweiten Subsystem korrespondierenden Anteil des Steuerungsprogrammes an den zum ersten Subsystem korrespondierenden Anteil des Steuerungsprogrammes weitergegeben wird.

Wenn das graphische Steuerungsmodell hierarchisch aufgebaut ist, kann eine Vielzahl von Blöcken in einer untergeordneten Ebene - vorliegend das zweite Subsystem - den Aufbau eines Blocks in einer übergeordneten Ebene - vorliegend das erste Subsystem - beschreiben. Subsysteme können zusätzliche Eigenschaften aufweisen, wie die Implementierung in einer getrennten Funktion und/oder ein Triggern der Ausführung des Subsystems über ein dediziertes Signal. In Subsystemen können spezielle Blöcke angeordnet sein, um die Eigenschaften des Subsystems weiter zu spezifizieren. Insbesondere ist vorgesehen, dass wenn ein Block eines inneren Subsystems, auf das Zielspezifizierungsobjekt referenziert, beim Erzeugen des Steuerungsprogrammes das Referenzieren auf das Zielspezifizierungsobjekt hierarchisch von dem zum inneren Subsystem korrespondierenden Anteil des Steuerungsprogrammes an den zum äußeren Subsystem korrespondierenden Anteil des Steuerungsprogrammes weitergegeben wird.

In einer weiteren bevorzugten Weiterbildung der Erfindung ist bevorzugt vorgesehen, dass bei der Generierung des Steuerungsprogrammes das Zielspezifizierungsobjekt für den Anteil des Steuerungsprogrammes, der zu demjenigen Block korrespondiert, der auf das Zielspezifizierungsobjekt referenziert, als Verknüpfung mitgeführt wird. Dies ermöglicht eine einfache Beibehaltung und Weitergabe der zielplattformspezifischen Informationen.

Gemäß einer weiteren bevorzugten Weiterbildung der Erfindung ist bevorzugt vorgesehen, dass der auf das Zielspezifizierungsobjekt referenzierende Block des graphischen Steuerungsmodells als Funktions-Block mit einer externen Funktion ausgestaltet ist. Bei dem Funktions-Block mit der externen Funktion kann es sich um einen nutzerspezifischen Code-Block (auch Custom-Code-Block genannt) handeln, der vom Nutzer spezifiziert wird. Durch Referenzieren auf das Zielspezifizierungsobjekt, in dem zielplattformspezifische Generierungsregeln für das Steuerungsprogramm spezifiziert sind, kann also die Einbindung externer Funktionalität mit unterschiedlichen Build-Abhängigkeiten sichergestellt werden. Insbesondere ist es aufgrund der stabilen Funktionsschnittstelle möglich, dass im Steuerungsprogramm gleichartige Wrapper-Aufrufe für alle unterschiedlichen Zielplattformen verwendet werden, und die konkrete Implementierung der Wrapper bevorzugt dem Nutzer obliegt. Beim Erzeugen des Steuerungsprogrammes wird bevorzugt die Verknüpfung des Funktions-Blocks mit dem Zielspezifizierungsobjekt mitgeführt, derart dass an jener Stelle der externen Funktion im generierten Steuerungsprogramm über die Verknüpfung die Informationen für den Build-Prozess bereitgestellt werden.

Gemäß einer bevorzugten Weiterbildung der Erfindung umfasst das Erzeugen des Steuerungsprogrammes für die Zielplattform aus dem graphischen Steuerungsmodell der Entwicklungsplattform die Schritte
- Erzeugen einer Zwischendarstellung aus dem graphischen Steuerungsmodell,
- Optimieren der erzeugten Zwischendarstellung, und
- Erzeugen des Steuerungsprogrammes für die Zielplattform durch Übersetzen der optimierten Zwischendarstellung,
wobei wenigstens einer der Schritte, ein Berücksichtigen der zielplattformspezifischen Generierungsregeln für Steuerungsprogrammanteile umfasst, die zu denjenigen Blöcken korrespondieren, die auf das Zielspezifizierungsobjekt referenzieren.

Es wird also bevorzugt ein Verfahren zum Erzeugen des Steuerungsprogrammes für die Zielplattform aus dem graphischen Steuerungsmodell der Entwicklungsplattform bereitgestellt, bei dem das Erzeugen des Steuerungsprogrammes ein Transformieren des graphischen Steuerungsmodelles in eine Zwischendarstellung, ein bevorzugt sukzessives Optimieren der Zwischendarstellung und ein Übersetzen der optimierten Zwischendarstellung in das Steuerungsprogrammes umfasst, wobei wenigstens einer der Schritte unter Berücksichtigung der im Zielspezifizierungsobjekt hinterlegten zielplattformspezifischen Generierungsregeln durchgeführt wird. Derart sind noch sämtliche Informationen des graphischen Steuerungsmodelles verfügbar.

Bevorzugt werden in der Zwischendarstellung die Blöcke des Blockdiagrammes des graphischen Steuerungsmodells in Anweisungen mit fester Ausführungsreihenfolge übersetzt, wodurch die Struktur der Zwischendarstellung semantisch eine textuelle Programmiersprache abbildet. Der Schritt des Transformierens kann eine Mehrzahl von Teilschritten beinhalten, wie das Überprüfen einer Anzahl von Regeln und das Anfügen von weiteren Codegenerierungsinformationen. Das Berücksichtigen der zielplattformspezifischen Generierungsregeln für Steuerungsprogrammanteile, die zu denjenigen Blöcken korrespondieren, die auf das Zielspezifizierungsobjekt referenzieren, kann prinzipiell in einem beliebigen Zwischenschritt des Transformierens erfolgt, und erfolgt bevorzugt bei jedem Transformationsschritt.

Gemäß einer weiteren bevorzugten Weiterbildung der Erfindung ist vorgesehen, dass das Steuerungsprogramm derart erzeugt wird, dass Steuerungsprogrammanteile, die zu denjenigen Blöcken korrespondieren, die auf das Zielspezifizierungsobjekt referenzieren, Informationen zum Erzeugen des ausführbaren Codes umfassen. Insbesondere werden also die für den Build-Prozess relevanten Informationen mitgeführt, besonders bevorzugt Informationen betreffend die Laufzeitumgebung der Zielplattform und die durch das Einbinden von Programmbibliotheken vorhandenen Abhängigkeiten, sowie Informationen betreffend den Compiler, die Compilerversion, und/oder die Compilereinstellungen.

Gemäß einer weiteren Weiterbildung der Erfindung ist vorgesehen, dass das Steuerungsprogramm wenigstens anteilig in C-Code erzeugt wird. Neben dem in C-Code vorliegenden Anteil umfasst das Steuerungsprogramm bevorzugt nicht zwingend in C-Code vorliegende textuelle Informationen. Besonders bevorzugt handelt es sich dabei um die Informationen zum Erzeugen des ausführbaren Codes. Diese liegen weiter bevorzugt in einem Makefile vor und/oder können zur Erzeugung eines Makefiles verwendet werden. In einem Makefile sind bevorzugt die Abhängigkeiten des Build-Prozesses formalisiert erfasst.

Unter C-Code wird vorliegend eine Programmiersprache verstanden, die von der Syntax und/oder vom grundlegenden Sprachaufbau an C angelehnt ist. Solche Sprachen weisen beispielsweise durch Semikolons abgeschlossene Anweisungen, durch geschweifte Klammern getrennte Codeblöcke, durch Klammern getrennte Parameter und/oder in Infixnotation definierte arithmetische und logische Ausdrücke auf. Sie werden teilweise auch als "Sprachen mit geschweiften Klammern" bezeichnet. Bevorzugt umfasst C-Code vorliegend auch Code in der Programmiersprache C++, Handel-C und/oder SA-C. Weiter bevorzugt wird darunter eine standardisierte Form von C-Code wie ANSI C, ANSI C++, ISO C, ISO C++, Standard C und/oder Standard C++ verstanden, die vom *American National Standards Institute* (ANSI), ISO/IEC JTC 1/SC 22/WG 14 der *International Organization for Standardization* (ISO), ISO/IEC JTC 1/SC 22/WG 21 des "The C++ Standards Committee - ISOCPP" der *International Organization for Standardization* (ISO) und/oder der *International Electrotechnical Commission* (IEC) veröffentlicht werden.

Gemäß einer weiteren bevorzugten Weiterbildung der Erfindung ist bevorzugt vorgesehen, dass die Zielplattform eine heterogene Hardware mit mehreren Komponenten umfasst und dass das Steuerungsprogramm derart erzeugt wird, dass Steuerungsprogrammanteile, die zu denjenigen Blöcken korrespondieren, die auf das Zielspezifizierungsobjekt referenzieren, an die Komponenten angepasste Anweisungen zur Ausführung umfassen. Unter einer heterogenen Hardware mit mehreren Komponenten wird vorliegend bevorzugt eine Hardware verstanden, die mehrere Recheneinheiten mit bevorzugt unterschiedlicher Architektur aufweist, wobei die Recheneinheiten bevorzugt auf einen gemeinsamen Adressraum und Speicher zugreifen. Beispielsweise kann die Zielplattform einen Prozessor und eine Beschleunigerplattform wie eine Graphikprozessor (GPU, *graphic processing unit),* oder einen *Field Programmable Gate Array* (FPGA) umfassen. Das Verfahren bietet insbesondere den Vorteil, dass auf einfache Weise für unterschiedliche Zielplattformen angepasster Steuerungsprogramme erzeugt werden können, die die spezifischen Eigenheiten der heterogenen Hardware der Zielplattform berücksichtig, ohne dafür die Vorteile einer modellbasierten Entwicklung über das graphische Steuerungsmodell zu verlieren.

Die Erfindung betrifft ferner ein Verfahren zum Konfigurieren einer als Steuergerät ausgestalteten Zielplattform, wobei die Zielplattform wenigstens eine Recheneinheit umfasst, und bevorzugt wenigstens einen Sensor und/oder Aktor aufweist, um Daten eines physikalischen Prozesses zu erfassen und/oder auf einen physikalischen Prozess einzuwirken, umfassend die Schritte:
- Einlesen eines graphischen Steuerungsmodell einer Entwicklungsplattform
- Erzeugen eines Steuerungsprogrammes für die Zielplattform aus dem eingelesenen graphischen Steuerungsmodell nach dem oben beschriebenen Verfahren,
- Erzeugen eines für die Recheneinheit der Zielplattform ausführbaren Codes durch Kompilieren des erzeugten Steuerungsprogrammes,
- Übertragen des erzeugten ausführbaren Codes auf die Zielplattform und/oder Hinterlegen des erzeugten ausführbaren Codes auf einem nicht-flüchtigen Speicher der Zielplattform und/oder Ausführen des erzeugten ausführbaren Codes durch die Recheneinheit der Zielplattform.

Das Steuergerät umfasst bevorzugt eine Schnittstelle zur Verbindung mit der Entwicklungsplattform. Weiter bevorzugt umfasst das Steuergerät einen Mikrocontroller mit einer von einem Prozessor der Entwicklungsplattform abweichenden Architektur, einen Arbeitsspeicher (RAM) und einen nichtflüchtigen Speicher. Weiter bevorzugt kann das Steuergerät eine heterogene Hardware mit mehr als einer Recheneinheit aufweisen. Besonders bevorzugt umfasst das Steuergerät einen Prozessor und eine Beschleunigerplattform. Weiter bevorzugt ist das Steuergerät derart ausgestaltet, dass der Prozessor und die Beschleunigerplattform auf einen gemeinsamen Adressraum und Arbeitsspeicher zugreifen. Weiter bevorzugt ist die Beschleunigerplattform ausgewählt aus einem Graphikprozessor (GPU, *graphic processing unit),* einem Koprozessor, insbesondere in Form eines in den Hauptprozessor integrierten Koprozessors einer *Accelerated Processing Unit* (APU), einem Vektorprozessor, einem Streamprozessor, einer *Parallel Processing Unit* (PPU), und/oder einem *Field Programmable Gate Array* (FPGA).

Gemäß einer weiteren bevorzugten Weiterbildung der Erfindung ist vorgesehen, dass der Schritt des Erzeugens des Steuerungsprogrammes für die Zielplattform derart durchgeführt wird, dass Steuerungsprogrammanteile, die zu denjenigen Blöcken korrespondieren, die auf das Zielspezifizierungsobjekt referenzieren, Informationen zum Erzeugen des ausführbaren Codes umfassen, und bei dem Schritt des Erzeugens des für die Recheneinheit der Zielplattform ausführbaren Codes durch Kompilieren des erzeugten Steuerungsprogrammes, die Informationen zum Erzeugen des ausführbaren Codes berücksichtigt werden. Besonders bevorzugt werden beim Kompilieren die durch Verknüpfung auf das Zielspezifizierungsobjekt mitgeführten Informationen zum Erzeugen des ausführbaren Codes verwertet, so dass ein auf die Eigenheiten der Zielplattform angepasster ausführbarere Code generiert wird.

Weiterhin betrifft die Erfindung eine Vorrichtung zur Datenverarbeitung umfassend Mittel zur Ausführung des oben beschriebenen computerimplementierten Verfahrens zum Erzeugen des Steuerungsprogrammes.

Besonders bevorzug umfasst die Vorrichtung eine Definitionsdatenbank zum Speichern von Informationen zum graphischen Steuerungsmodell, und insbesondere zum Hinterlegen des Zielspezifizierungsobjekt. Die Definitionsdatenbank kann eine Baumstruktur aufweisen und/oder als eine einfache Datei in einem Speicher des der Vorrichtung hinterlegt sein. Alternativ kann vorgesehen sein, dass das Zielspezifizierungsobjekt in einem dedizierten Datenbanksystem hinterlegt ist.

Ferner betrifft die Erfindung ein Computerprogrammprodukt umfassend Befehle, die bei der Ausführung des Programms durch einen Computer diesen veranlassen, das oben beschriebene computerimplementierte Verfahren zum Erzeugen des Steuerungsprogrammes auszuführen.

Ferner betrifft die Erfindung einen computerlesbaren Datenträger, auf dem das obige Computerprogrammprodukt gespeichert ist.

Bevorzugt sind die Befehle auf dem computerlesbaren Datenträger eingebettet, und die Befehle bewirken, wenn sie von einem Prozessor des Computers ausgeführt werden, dass der Prozessor das Verfahren zum Erzeugen des Steuerungsprogrammes ausführt.

Die technischen Vorteile und Effekte des Verfahrens zum Konfigurieren der als Steuergerät ausgestalteten Zielplattform, der Vorrichtung zur Datenverarbeitung, des Computerprogrammproduktes und des computerlesbaren Datenträgers ergeben sich für den Fachmann durch die Beschreibung des Verfahrens zum Erzeugen des Steuerungsprogrammes, sowie durch die nachfolgend beschriebenen Ausführungsbeispiele.

Die Erfindung wird nachfolgend unter Bezugnahme auf die Zeichnungen näher erläutert. Die dargestellten Ausführungsformen sind stark schematisiert, d.h. die Abstände und die lateralen und die vertikalen Abmessungen sind nicht maßstäblich und weisen, sofern nicht anders angegeben, auch keine ableitbaren geometrischen Relationen zueinander auf.

### In der Zeichnung zeigen

- Fig. 1: schematisch eine Vorrichtung zur Datenverarbeitung, gemäß einem bevorzugten Ausführungsbeispiel der Erfindung,
- Fig. 2: schematisch die auf der Vorrichtung gemäß Figur 1 installierten Softwarekomponenten,
- Fig. 3: schematisch im oberen Teil ein graphisches Steuerungsmodell anhand dessen ein computerimplementiertes Verfahren zum Generieren eines Steuerungsprogrammes, gemäß einem bevorzugten Ausführungsbeispiel der Erfindung, erläutert wird, wobei der untere Teil der Figur 3 das generierte Steuerungsprogramm illustriert.
- Fig. 4: schematisch eine heterogene Hardware einer Zielplattform für die mit dem Verfahren aus Figur 3 ein Steuerungsprogramm erzeugt wird,
- Fig. 5: schematisch in a) eine Software-Architektur für ein Ausführungsbeispiel der Hardware aus Figur 4, in b) eine schematische Darstellung eines Zielspezifizierungsobjektes, und in c) ein schematischer Programm-Ablauf des mittels des in Figur 3 illustrierten Verfahrens generierten Steuerungsprogrammes auf der in Figur 5 gezeigten Architektur, und
- Fig. 6: schematisch in a) eine Software-Architektur für ein weiteres Ausführungsbeispiel der Hardware aus Figur 4, in b) eine schematische Darstellung eines weiteren Zielspezifizierungsobjektes, und in c) ein schematischer Programm-Ablauf des mittels des in Figur 3 illustrierten Verfahrens generierten Steuerungsprogrammes auf der in Figur 6 gezeigten Architektur.

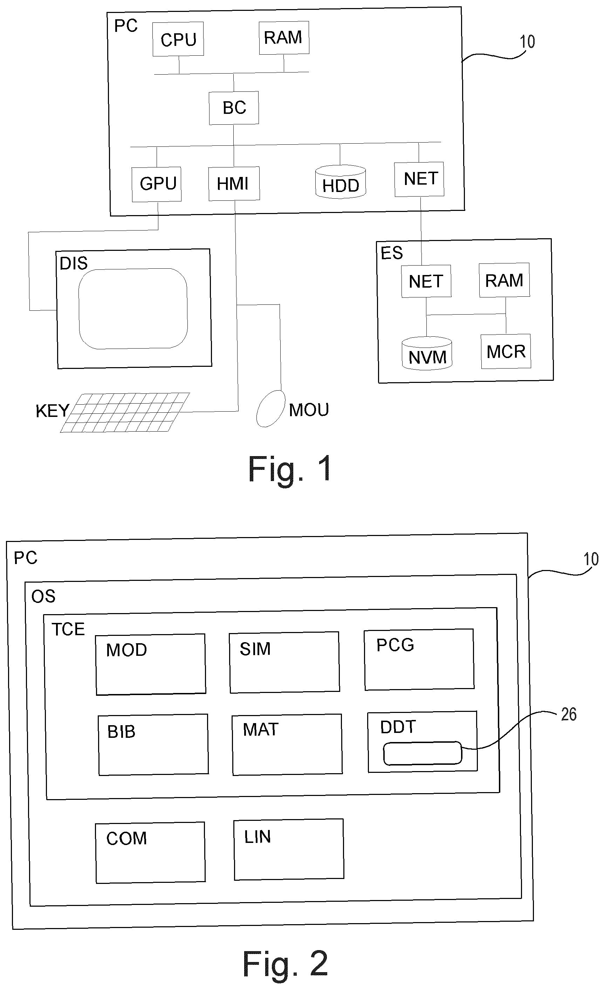

Figur 1 zeigt schematisch eine beispielhafte Ausführung einer Vorrichtung zur Datenverarbeitung 10, vorliegend Computersystem PC genannt. Das Computersystem PC ist dazu eingerichtet, ein Verfahren zum Erzeugen eines Steuerungsprogrammes für eine Zielplattform ES aus einem graphischen Steuerungsmodell einer Entwicklungsplattform - sprich des Computersystems - auszuführen. Das Computersystem PC weist einen Prozessor CPU auf, der insbesondere als Mehrkernprozessor realisiert sein kann, einen Arbeitsspeicher RAM und einen Buscontroller BC. Bevorzugt ist das Computersystem PC dazu ausgelegt, von einem Nutzer direkt manuell bedient zu werden, wobei über eine Grafikkarte GPU ein Monitor DIS und über eine Mensch-Maschine-Schnittstelle HMI eine Tastatur KEY und eine Maus MOU angeschlossen sind. Prinzipiell könnte die Mensch-Maschine-Schnittstelle des Computersystems PC auch als Touch-Interface ausgebildet sein. Das Computersystem PC umfasst weiterhin einen nichtflüchtigen Datenspeicher HDD, der insbesondere als Festplatte und/oder Solid State Disk ausgeführt sein kann, sowie eine Schnittstelle NET, insbesondere eine Netzwerkschnittstelle. Über die Schnittstelle NET kann ein Steuergerät ES - sprich die Zielplattform ES - angeschlossen sein. Prinzipiell können ein oder mehrere beliebige Schnittstellen, insbesondere drahtgebundene Schnittstellen, an dem Computersystem PC vorhanden und jeweils für die Verbindung mit einem Steuergerät ES einsetzbar sein. Zweckmäßigerweise kann eine Netzwerkschnittstelle nach dem Ethernet-Standard verwendet werden; die Schnittstelle NET kann auch drahtlos ausgeführt sein, wie insbesondere als WLAN-Schnittstelle oder nach einem Standard wie Bluetooth.

Das Steuergerät ES kann als ein Seriensteuergerät oder als Evaluierungsboard für die Zielplattform ES ausgeführt sein. Zweckmäßigerweise umfasst es eine Schnittstelle NET zur Verbindung mit dem Computersystem PC - sprich der Entwicklungsplattform, einen Mikrocontroller MCR mit einer von dem Prozessor des Computersystems PC abweichenden Architektur, einen Arbeitsspeicher RAM und einen nichtflüchtigen Speicher NVM.

In Figur 2 ist ein Schema der vorzugsweise auf dem Computersystem PC installierten Softwarekomponenten dargestellt. Diese verwenden Mechanismen des Betriebssystems OS, um beispielsweise auf den nichtflüchtigen Speicher HDD zuzugreifen oder über die Netzwerkschnittstelle NET eine Verbindung zu einem externen Rechner und/oder dem Steuergerät ES aufzubauen.

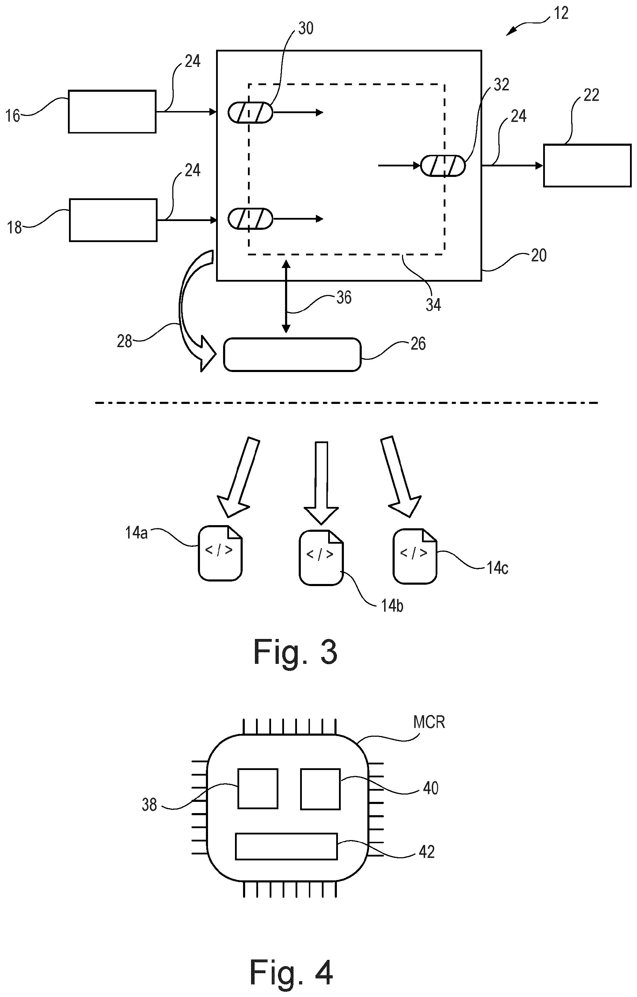

Eine technische Rechenumgebung TCE ermöglicht die Erstellung von Modellen - insbesondere graphische Steuerungsmodelle 12 (siehe Figur 3) und die Erzeugung eines Steuerungsprogrammes 14, auch Quellcode genannt, aus den graphischen Steuerungsmodellen 12. In einer Modellierumgebung MOD können vorzugsweise über eine graphische Benutzerschnittstelle graphische Steuerungsmodelle 12 eines dynamischen Systems erstellt werden. Hierbei kann es sich insbesondere um Blockdiagramme handeln, welche mehrere Blöcke 16, 18, 20, 22 umfassen und das zeitliche Verhalten und/oder interne Zustände eines dynamischen Systems beschreiben. Zumindest einige der Blöcke 16, 18, 20, 22 können über Signallinien 24 miteinander verbunden sein, wobei die Signallinien 24 gerichtete Verbindungen zum Austausch von Signalen darstellen. Über die Blöcke 16, 18, 20, 22 können auf den Signalen durchzuführende Operationen und/oder Rechenschritte definiert werden. Das graphische Steuerungsmodell 12 referenziert auf eine Definitionsdatenbank DDT, in der Informationen zum graphischen Steuerungsmodell 12 gespeichert sind.

Die Rechenumgebung TCE umfasst eine oder mehrere Bibliotheken BIB, aus der Blöcke 16, 18, 20, 22 bzw. Bausteine für den Aufbau eines Modells 12 ausgewählt werden können. In einer Skriptumgebung MAT können Anweisungen interaktiv oder über eine Batchdatei eingegeben werden, um Berechnungen durchzuführen oder das Modell 12 zu modifizieren. Die Rechenumgebung TCE umfasst weiterhin eine Simulationsumgebung SIM, die dazu eingerichtet ist, das Blockdiagramm zu interpretieren bzw. auszuführen, um das zeitliche Verhalten des Systems zu untersuchen. Diese Berechnungen erfolgen vorzugsweise mit Fließkommazahlen hoher Genauigkeit auf einem oder mehreren Kernen des Mikroprozessors CPU des Computersystems PC.

Aus einem erstellten Modell 12 kann mit Hilfe eines Codegenerators PCG das Steuerungsprogramm 14 - auch Quellcode 14 genannt - das bevorzugt wenigstens anteilig in einer Programmiersprache wie C vorliegt, erzeugt werden. Der Quellcode 14 liegt vorliegend in vollständig textueller Form vor und umfasst Instruktionen für das Steuergerät ES. Um den Quellcode 14 zu erzeugen, wird im vorliegenden Ausführungsbeispiel das Verfahren zum Erzeugen eines Steuerungsprogrammes für eine Zielplattform ES aus dem graphischen Steuerungsmodell 12 der Entwicklungsplattform durchgeführt. Dabei ist im vorliegenden Ausführungsbeispiel vorgesehen, dass die Definitionsdatenbank DDT wenigstens ein Zielspezifizierungsobjekt 26 umfasst, wobei das Zielspezifizierungsobjekt 26 zielplattformspezifische Generierungsregeln für das Steuerungsprogramm 14 umfasst. Wie in Figur 3 gezeigt ist, wird von einem der Blöcke 16, 18, 20, 22, nämlich von Block 20 des graphischen Steuerungsmodells 12 auf das Zielspezifizierungsobjekt 26 referenziert, was durch den Pfeil 28 illustriert ist. Wie die untere Hälfte von Figur 3 illustriert, werden beim Erzeugen des Steuerungsprogrammes 14 die zielplattformspezifischen Generierungsregeln für Steuerungsprogrammanteile, die zu denjenigen Blöcken 20 korrespondieren, die auf das Zielspezifizierungsobjekt 26 referenzieren 28, berücksichtigt. Derart können zielplattformspezifische Umsetzungsvarianten des Steuerungsprogrammes 14a, 14b, 14c erzeugt werden, die Eigenarten der spezifischen Zielplattform berücksichtigen. Insbesondere können dadurch zielplattformspezifische Eigenheiten und Abhängigkeiten beim Erstellungsprozess - auch Build-Prozess des Steuerungsprogrammes 14 berücksichtigt werden, also bei jenem Vorgang, bei dem für die Recheneinheit MCR der Zielplattform ES ausführbarer Code automatisiert erzeugt wird und die Kompilierung und/oder das Linken des ausführbaren Codes an Programmbibliotheken stattfindet. Entsprechend wird vorliegend in der Definitionsdatenbank DDT das Zielspezifizierungsobjekt 26 vorgehalten, das die zielplattformspezifischen Generierungsregeln umfasst.

Weiterhin können in der Definitionsdatenbank DDT auch andere zusätzliche Informationen zu dem Modell 12, wie Informationen zu den Variablen in den Blöcken - Blockvariablen genannt - hinterlegt werden. Den Blockvariablen können Wertebereiche und/oder Skalierungen zugeordnet werden, um eine Berechnung des Modells 12 mit Festkomma-Instruktionen zu unterstützten. Auch gewünschte Eigenschaften des Quellcodes, beispielsweise Konformität zu einem Standard wie MISRA, können in der Definitionsdatenbank DDT eingestellt bzw. hinterlegt werden. Jede Blockvariable kann einem vorgegebenen Variablentyp zugeordnet werden und/oder es können eine oder mehrere gewünschte Eigenschaften, wie beispielsweise die Zulässigkeit von Optimierungen wie einem Zusammenfassen von Variablen eingestellt werden.

Der Codegenerator PCG wertet vorzugsweise die Einstellungen der Definitionsdatenbank DDT und insbesondere das hinterlegte Zielspezifizierungsobjekt 26 aus und verwendet diese Informationen bei der Erzeugung des Quellcodes 14. Die Definitionsdatenbank DDT kann eine Baumstruktur aufweisen bzw. als eine einfache Datei in einem Speicher des Computersystems PC hinterlegt sein; alternativ kann es vorgesehen sein, die Definitionsdaten in einem dedizierten Datenbanksystem zu hinterlegen. Die Definitionsdatenbank DDT kann eine Programmschnittstelle und/oder Import-/Export-Funktionen aufweisen.

Das Computersystem PC weist in diesem Ausführungsbeispiel zudem einen Compiler COM und einen Linker LIN auf, die zweckmäßigerweise für die Erzeugung von auf dem Steuergerät ES ausführbaren Code eingerichtet sind. Prinzipiell kann eine Vielzahl von Compilern vorhanden sein, insbesondere Cross-Compiler für unterschiedliche Zielplattformen, um Steuergeräte bzw. Evaluationsboards ES mit unterschiedlichen Prozessorarchitekturen zu unterstützen.

Figuren 3 zeigen anhand eines beispielhaften graphischen Steuerungsmodelles 12 das Prinzip des computerimplementierten Verfahrens zum Generieren des Steuerungsprogrammes 14 für die Zielplattform ES. Wie Figur 3 zeigt, weist der Block 20, der auf das Zielspezifizierungsobjekt 26 referenziert (symbolisiert durch Pfeil 28), zwei Signallinien 24 auf, um Ausgangssignale der Blöcke 16 und 18 zu empfangen. Der Signalleingang am Block 20 ist jeweils über einen Eingangsport 30 realisiert. Der Block 20 verarbeitet die Signale und generiert ein Ergebnis, das über den Ausgangsport 32 und die Signallinien 24 an den Block 22 weitergegeben wird. Die Signalverarbeitung innerhalb des Blockes 20 ist in Figur 3 nicht konkret dargestellt. Generell kann sie eine Vielzahl von Blöcken in einer untergeordneten Ebene umfassen, die den Aufbau des Blocks 20 beschreiben.

Da der Block 20 des graphischen Steuerungsmodells 12 auf das Zielspezifizierungsobjekt 26 referenziert, werden beim Erzeugen des Steuerungsprogrammes 14, was in der unteren Hälfte von Figur 3 stark schematisiert illustriert ist, zielplattformspezifische Generierungsregeln für Steuerungsprogrammanteile, die zur Funktionalität 34 des Blockes 20 korrespondieren, berücksichtigt. Die Funktionalität 34 des Blockes 20 ist in Figur 3 schematisch mit einer gestrichelten Linie 34 visualisiert, wobei durch den Doppelpfeil 36 das Berücksichtigen von im Zielspezifizierungsobjekt 26 hinterlegten zielplattformspezifische Generierungsregeln für Steuerungsprogrammanteile, die zur Funktionalität 34 des Blockes 20 korrespondieren, illustriert ist. Insbesondere wird das Steuerungsprogramm 14 in der Form generiert, dass ein zur Ergebnisweitergabe korrespondierender Funktionsprototyp der Funktion des Steuerungsprogrammes 14, das die Funktionalität 34 des Blockes 20 umsetzt, von der zielplattformspezifischen Ausprägung des Steuerungsprogrammes 14 unabhängig ist. Dies ist in Figur 3 dahingehend illustriert, dass die Signaleingangs- und Signalausgangsschnittstellen über die Eingangsports 30 und den Ausgangsport 32, jeweils zur Hälfe innerhalb des von der gestrichelten Linie 34 umgebenden Bereichs sind. Somit ist also im generierten Steuerungsprogramm 14 die Schnittstelle der Funktion trotz zielplattformspezifischer Ausprägung der Funktion für alle möglichen zielplattformspezifischen Ausprägungen gleichbleibend.

Figur 4 zeigt schematisch ein Ausführungsbeispiel der Hardware MCR der Zielplattform ES. Vorliegend ist die Hardware MCR als heterogene Hardware mit mehreren Komponenten 38, 40 ausgestaltet. Die Komponente 38 ist der Hauptprozessor 38 und die Komponente 40 eine Beschleunigerplattform 40. Der Hauptprozessor 38 und die Beschleunigerplattform 40 greifen auf einen gemeinsamen Adressraum und einen gemeinsamen Arbeitsspeicher 42 zu.

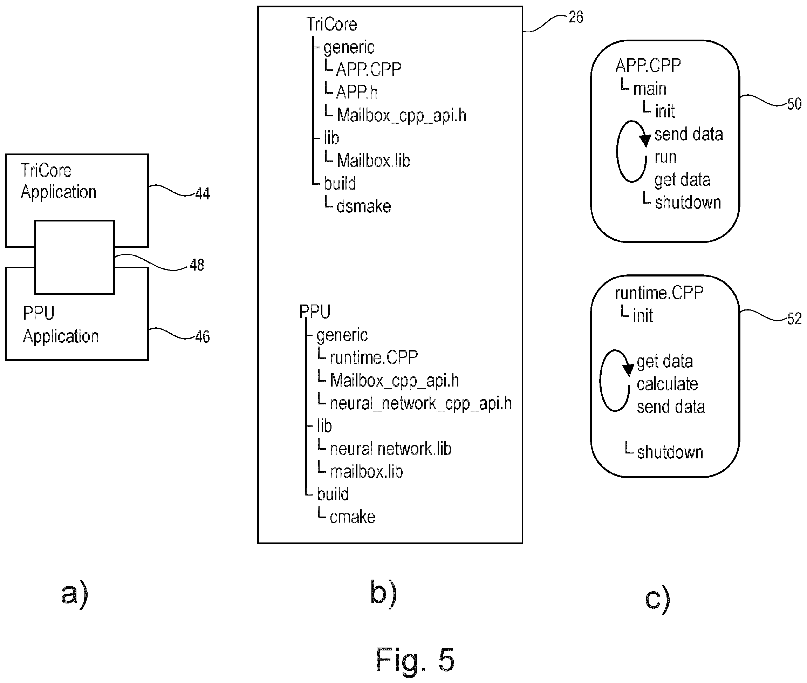

Im Folgenden wird zunächst mit Verweis auf Figur 5 ein Ausführungsbeispiel beschrieben, bei dem der Hauptprozessor 38 als ein TriCore^{™} Prozessor 38 und die Beschleunigerplattform 40 als *Parallel Processing Unit,* PPU 40 ausgestaltete ist. Die Software-Architektur für diese Komponenten 38, 40 ist in Figur 5a) gezeigt. Der TriCore^{™} Prozessor 38 führt die TriCore^{™} Applikation 44 aus, während die PPU 40 die PPU Applikation 46 ausführt. Die TriCore^{™} Applikation 44 und die PPU Applikation 46 kommunizieren über eine Schnittstelle 48. Diese ist vorliegend als Mailbox-System ausgestaltet, wobei sich die TriCore^{™} Applikation 44 Services der PPU Applikation 46 reservieren und abrufen kann, um spezifische Berechnungen, wie Vektorbefehle an die PPU 40 auszulagern. Vorliegend wird die PPU 40 verwendet, um Berechnungen mit einem künstlichen neuronalen Netzwerk durchzuführen.

Figur 5b) zeigt schematisch eine Darstellung eines Zielspezifizierungsobjektes 26 für die in Figur 5a) gezeigte Architektur. Das Zielspezifizierungsobjektes 26 weist die zielplattformspezifischen Generierungsregeln für das Steuerungsprogramm 14 auf.

Vorliegend ist für die TriCore^{™} Applikation 44 in dem Zielspezifizierungsobjektes 26 unter "generic" der Bezeichner der TriCore^{™} Applikation "APP.CPP" sowie der Bezeichner für dessen Header-Datei "APP.h" hinterlegt. Die Header-Datei liefert insbesondere Informationen zu den zur Verfügung stehenden Funktionsprototypen. Weiterhin ist unter "generic" der Bezeichner "Mailbox_cpp_api.h" für das Mailbox-System der Schnittstelle 48 hinterlegt. Unter "lib" ist der Bezeichner für die das Mailbox-System betreffende Programmbibliothek - "Mailbox.lib" hinterlegt. Weiterhin ist im Zielspezifizierungsobjekt 26 unter "build" der Bezeichner "dsmake" hinterlegt. Im Build-Prozess wird entsprechend der Prozess dsmake aufgerufen, der ein Makefile auswertet, welches den Aufruf des Compilers COM und Linkers LIN enthält. Das Makefile wird unter Berücksichtigung der im Zielspezifizierungsobjekt 26 hinterlegten zielplattformspezifischen Generierungsregeln erstellt und/oder angepasst.

Für die PPU Applikation 46 ist in dem Zielspezifizierungsobjektes 26 unter "generic" der Bezeichner der PPU Applikation "runtime.CPP", der Bezeichner "Mailbox_cpp_api.h" für das Mailbox-System der Schnittstelle 48 sowie der Bezeichner "neural_network_cpp_api.h" für den die Berechnungen mit dem künstlichen neuronalen Netzwerk durchführenden Prozess hinterlegt. Unter "lib" sind entsprechend die Bezeichner für die das Mailbox-System betreffende Programmbibliothek - "Mailbox.lib" - sowie für die das künstliche neuronale Netzwerk betreffende Programmbibliothek - "neural network.lib" - spezifiziert. Weiterhin ist im Zielspezifizierungsobjektes 26 unter "build" der Bezeichner "cmake" für den das Makefile auswertenden Prozess spezifiziert, welcher den Aufruf des Compilers COM und Linkers LIN durchführt. Das Makefile wird unter Berücksichtigung der im Zielspezifizierungsobjekt 26 hinterlegten zielplattformspezifischen Generierungsregeln erstellt und/oder angepasst.

Figur 5c) zeigt einen schematischen Programm-Ablauf des generierten Steuerungsprogrammes 14 auf der in Figur 4 und 5a) gezeigte Hard- und Softwarearchitektur der Zielplattform ES für die Komponenten 38 und 40. Der Programmablauf auf dem TriCore^{™} Prozessor 38 ist in 50 dargestellt und weist abgekürzt durch "init" die Initialisierung des Prozesses des Steuerungsprogrammes 14 auf, abgekürzt durch "send data" das Bereitstellen von Daten an die PPU, abgekürzt durch "run" den Ablauf, abgekürzt durch "get datat" das Abholen von Ergebnissen von der PPU, die in der Regel noch weiterverarbeitet werden und durch "shutdown" das Beenden des Prozesses.

Während des Programmablaufs 50 wird also eine Berechnung auf die PPU ausgelagert, so dass die PPU Applikation 46 den Ablauf 52 durchläuft - sprich das mittels "init" abgekürzte Initialisieren des Prozesses, ein Abrufen von Daten "get data", eine Berechnung "calculate", und ein Übermitteln von Daten über die Schnittstelle 48 "send data", bevor sich der Prozess beendet "shutdown".

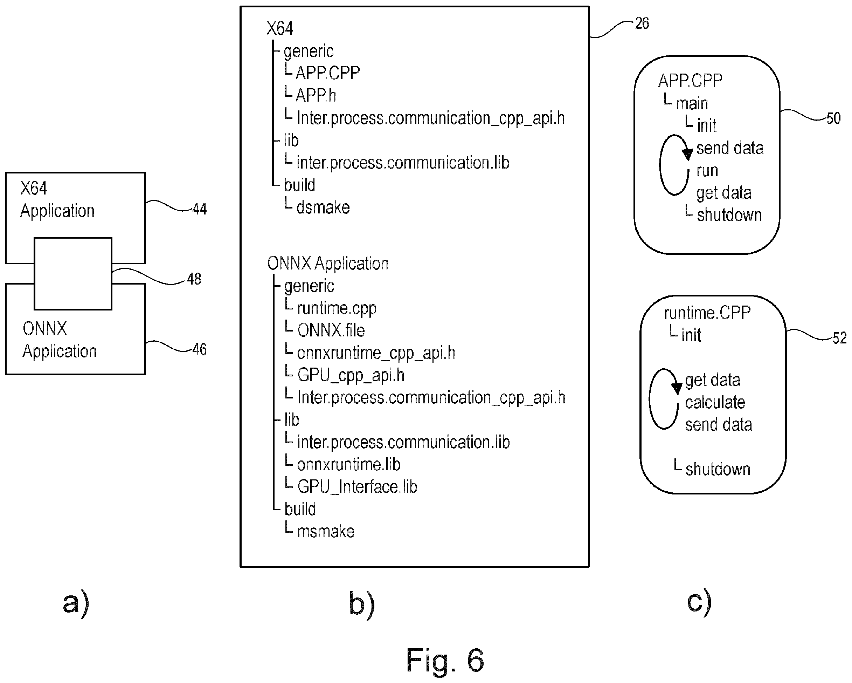

In Figur 6 ist analog zu Figur 5 ein weiteres Ausführungsbeispiel der Erfindung gezeigt. Während in Figur 5 der Hauptprozessor 38 als ein TriCore^{™} Prozessor und die Beschleunigerplattform 40 als PPU ausgestaltete ist, ist in Figur 6 der Hauptprozessor 38 als ein X86_64 Prozessor 38 und die Beschleunigerplattform 40 als Grafikprozessor, GPU 40 ausgestaltete.

Vorliegend wird die GPU 40 verwendet, um Berechnungen mit einem künstlichen neuronalen Netzwerk durchzuführen. Entsprechend wird wie in Figur 6a) gezeigt eine X64 Applikation 44 vom X86_64 Prozessor 38 ausgeführt, während eine ONNX Applikation 46 von der GPU 40 ausgeführt wird. Die X64 Applikation 44 und die ONNX Applikation 46 kommunizieren über eine Schnittstelle 48. Diese ist vorliegend als Interprozesskommunikation *(Interprocess Communication,* IPC) über eine C-Schnittstelle ausgestaltet.

Figur 6b) zeigt schematisch eine Darstellung eines Zielspezifizierungsobjektes 26 für die in Figur 6a) gezeigte Architektur. Das Zielspezifizierungsobjektes 26 weist die zielplattformspezifischen Generierungsregeln für das Steuerungsprogramm 14 auf.

Vorliegend ist für die X64 Applikation 44 in dem Zielspezifizierungsobjektes 26 unter "generic" der Bezeichner der X64 Applikation "APP.CPP" sowie der Bezeichner für dessen Header-Datei "APP.h" hinterlegt. Weiterhin ist unter "generic" der Bezeichner "Inter.process.communication_cpp_api.h" für die Interprozesskommunikation der Schnittstelle 48 hinterlegt. Unter "lib" ist der Bezeichner für die die Interprozesskommunikation betreffende Programmbibliothek - "inter.process.communication.lib" hinterlegt. Weiterhin ist im Zielspezifizierungsobjekt 26 unter "build" der Bezeichner "dsmake" hinterlegt. Der Bezeichner "dsmake" spezifiziert den im Build-Prozess das Makefile auswertenden Prozess, wobei das Makefile unter Berücksichtigung der im Zielspezifizierungsobjekt 26 hinterlegten zielplattformspezifischen Generierungsregeln erstellt und/oder angepasst wird.

Für die ONNX Applikation 46 ist in dem Zielspezifizierungsobjektes 26 unter "generic" der Bezeichner der ONNX Applikation "runtime.cpp", der Bezeichner der Header-Datei "onxruntime_cpp_api.h", sowie der Bezeichner für die notwendigen ONNX-files unter "ONNX.file" hinterlegt. Weiterhin ist unter "generic" der Bezeichner "GPU_cpp_api.h" für die Auslagerung von Berechnungen an die GPU 40, sowie der Bezeichner "Inter.process.communication_cpp_api.h" für die Interprozesskommunikation der Schnittstelle 48 hinterlegt. Unter "lib" ist der Bezeichner für die die Interprozesskommunikation betreffende Programmbibliothek - "inter.process.communication.lib", der Bezeichner für die die ONNX-Applikation betreffende Programmbibliothek - "onnxruntime.lib" - sowie der Bezeichner für die die Auslagerung an die GPU betreffende Programmbibliothek - "GPU_Interface.lib" hinterlegt. Weiterhin ist im Zielspezifizierungsobjekt 26 unter "build" der Bezeichner "msmake" hinterlegt. Der Bezeichner "msmake" spezifiziert den im Build-Prozess das Makefile auswertenden Prozess, wobei das Makefile unter Berücksichtigung der im Zielspezifizierungsobjekt 26 hinterlegten zielplattformspezifischen Generierungsregeln erstellt und/oder angepasst wird.

In Figur 6c) ist ein schematischer Programm-Ablauf des generierten Steuerungsprogrammes 14 auf der in Figur 4 und 6a) gezeigten Hard- und Softwarearchitektur der Zielplattform ES für die Komponenten 38 und 40 schematisch dargestellt. Der Programmablauf auf dem X86_64 Prozessor 38 ist in 50 dargestellt und weist abgekürzt durch "init" die Initialisierung des Prozesses des Steuerungsprogrammes 14 auf, abgekürzt durch "send data" das Bereitstellen von Daten an die GPU, abgekürzt durch "run" den Ablauf, abgekürzt durch "get datat" das Abholen von Ergebnissen von der GPU, die in der Regel noch weiterverarbeitet werden, und durch "shutdown" das Beenden des Prozesses.

Während des Programmablaufs 50 wird somit über Interprozesskommunikation eine Berechnung auf die GPU 40 ausgelagert, so dass die ONNX Applikation 46 den Ablauf 52 durchläuft - sprich das mittels "init" abgekürzte Initialisieren des Prozesses, ein Abrufen von Daten "get data", eine Berechnung "calculate" und ein Übermitteln von Daten über die Schnittstelle 48 "send data", bevor sich der Prozess beendet "shutdown".

Die beschriebenen Ausführungsbeispiele sind lediglich Beispiele, die im Rahmen der Ansprüche auf vielfältige Weise modifiziert und/oder ergänzt werden können. Jedes Merkmal, das für ein bestimmtes Ausführungsbeispiel beschrieben wurde, kann eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

### Bezugszeichenliste

- 10: Vorrichtung zur Datenverarbeitung
- 12: graphisches Steuerungsmodell
- 14: Steuerungsprogramm
- 16: Block
- 18: Block
- 20: Block, der auf Zielspezifizierungsobjekt referenziert
- 22: Block
- 24: Signallinie
- 26: Zielspezifizierungsobjekt
- 28: Pfeil, der das Referenzieren symbolisiert
- 30: Eingangsport
- 32: Ausgangsport
- 34: Funktionalität des Blockes 20
- 36: Doppelpfeil
- 38: Hauptprozessor, TriCore^{™}, X86_64
- 40: Beschleunigungsplattform, PPU, GPU
- 42: Speicher
- 44: Applikation des Hauptprozessors
- 46: Applikation der Beschleunigerplattform
- 48: Schnittstelle, Mailbox-System, C-Schnittstelle für IPC
- 50: Programmablauf der Applikation des Hauptprozessors
- 52: Programmablauf der Applikation der Beschleunigerplattform

- PC: Computersystem
- CPU: Prozessor
- RAM: Arbeitsspeicher
- BC: Buscontroller
- GPU: Grafikkarte
- DIS: Monitor
- HMI: Peripherieschnittstelle
- KEY: Tastatur
- MOU: Maus
- HDD: nichtflüchtiger Datenspeicher
- NET: Schnittstelle, Netzwerkschnittstelle
- ES: Steuergerät
- MCR: Microcontroller
- NVM: Speicher
- OS: Betriebssystem
- TCE: technische Rechenumgebung
- MOD: Modellierungsumgebung
- BIB: Bibliothek
- MAT: Skriptumgebung
- SIM: Simulationsumgebung
- PCT: Codegenerator
- DDT: Definitionsdatenbank
- COM: Compiler
- LIN: Linker

## Patentansprüche

1. Computerimplementiertes Verfahren zum Generieren eines Steuerungsprogrammes (14) für eine Zielplattform (ES) aus einem graphischen Steuerungsmodell (12) einer Entwicklungsplattform,
wobei das graphische Steuerungsmodell (12) ein Blockdiagramm mit einer Mehrzahl von Blöcken (16, 18, 20, 22) umfasst,
wobei das graphische Steuerungsmodell (12) auf eine Definitionsdatenbank (DDT) referenziert, in der Informationen zum graphischen Steuerungsmodell (12) gespeichert sind,
wobei die Definitionsdatenbank (DDT) wenigstens ein Zielspezifizierungsobjekt (26) umfasst,
**dadurch gekennzeichnet, dass**
das Zielspezifizierungsobjekt (26) zielplattformspezifische Generierungsregeln für das Steuerungsprogramm (14) umfasst,
das Zielspezifizierungsobjekt (26) von einem oder mehreren Blöcken (20) des graphischen Steuerungsmodells (12) referenziert wird, und
beim Erzeugen des Steuerungsprogrammes (14) die zielplattformspezifischen Generierungsregeln für Steuerungsprogrammanteile, die zu denjenigen Blöcken (20) korrespondieren, die auf das Zielspezifizierungsobjekt (26) referenzieren, berücksichtigt werden.

2. Verfahren nach dem vorhergehenden Anspruch, wobei die zielplattformspezifischen Generierungsregeln für das Steuerungsprogramm (14) Eigenheiten einer Steuerungsprogrammsprache, einer Hardware (MCR) der Zielplattform (ES), einer Hardwareeinstellung der Zielplattform (ES), einer Laufzeitumgebung der Zielplattform (ES), eines Compilers (COM) zum Erzeugen eines für eine Recheneinheit (38, 40) der Zielplattform ausführbaren Codes aus dem Steuerungsprogramm (14), einer Compilerversion, und/oder einer Compilereinstellung berücksichtigen.

3. Verfahren nach dem vorhergehenden Anspruch, wobei der auf das Zielspezifizierungsobjekt (26) referenzierende Block (20) des graphischen Steuerungsmodells (12) eine Signalverarbeitung durchführt, dessen Ergebnis von wenigstens einem anderen Block (22) im graphischen Steuerungsmodell (12) verwendet wird, und wobei beim Erzeugen des Steuerungsprogrammes (14) das Steuerungsprogramm (14) in der Form generiert wird, dass ein zur Ergebnisweitergabe korrespondierender Funktionsprototyp unabhängig von der zielplattformspezifischen Ausprägung desjenigen Anteils des Steuerungsprogrammes (14) ist, der zu dem auf das Zielspezifizierungsobjekt (26) referenzierenden Block (20) korrespondiert.

4. Verfahren nach Anspruch 3, wobei der auf das Zielspezifizierungsobjekt (26) referenzierende Block (20) des graphischen Steuerungsmodells (12) ein Signal wenigstens an einen andere Block (22) weiterleitet, und wobei beim Erzeugen des Steuerungsprogrammes (14) das Steuerungsprogramm (14) in der Form generiert wird, dass eine Angabe über einen Rückgabewert der Funktion im Funktionsprototyp unabhängig von der zielplattformspezifischen Ausprägung desjenigen Anteils des Steuerungsprogrammes (14) ist, der zu dem auf das Zielspezifizierungsobjekt (26) referenzierenden Block (20) korrespondiert.

5. Verfahren nach Anspruch 3 oder 4, wobei der auf das Zielspezifizierungsobjekt (26) referenzierende Block (20) des graphischen Steuerungsmodells (12) wenigstens ein Signal empfängt, und wobei beim Erzeugen des Steuerungsprogrammes (14) das Steuerungsprogramm (14) in der Form generiert wird, dass eine Angabe über Funktionsparameter im Funktionsprototyp unabhängig von der zielplattformspezifischen Ausprägung desjenigen Anteils des Steuerungsprogrammes (14) ist, der zu dem auf das Zielspezifizierungsobjekt (26) referenzierenden Block (20) korrespondiert.

6. Verfahren nach einem der vorhergehenden Ansprüche, wobei das Blockdiagramm (12) hierarchisch aufgebaut ist und mindestens ein erstes Subsystem und ein zweites Subsystem umfasst, wobei das erste Subsystem ein äußeres Subsystem ist, derart dass das zweite Subsystem von dem ersten Subsystem umfasst wird, wobei das zweite Subsystem wenigstens einen Block (20) umfasst, der auf das Zielspezifizierungsobjekt (26) referenziert, und wobei beim Erzeugen des Steuerungsprogrammes (14) für die Zielplattform (ES) das Steuerungsprogramm (14) in der Form generiert wird, dass das Referenzieren hierarchisch von dem zum zweiten Subsystem korrespondierenden Anteil des Steuerungsprogrammes (14) an den zum ersten Subsystem korrespondierenden Anteil des Steuerungsprogrammes (14) weitergegeben wird.

7. Verfahren nach einem der vorhergehenden Ansprüche, wobei bei der Generierung des Steuerungsprogrammes (14) das Zielspezifizierungsobjekt (26) für den Anteil des Steuerungsprogrammes (14), der zu demjenigen Block (20) korrespondiert, der auf das Zielspezifizierungsobjekt (26) referenziert, als Verknüpfung mitgeführt wird.

8. Verfahren nach einem der vorhergehenden Ansprüche, wobei der auf das Zielspezifizierungsobjekt (26) referenzierende Block (20) des graphischen Steuerungsmodells (12) als Funktions-Block mit einer externen Funktion ausgestaltet ist.

9. Verfahren nach einem der vorhergehenden Ansprüche, wobei das Erzeugen des Steuerungsprogrammes (14) für die Zielplattform (ES) aus dem graphischen Steuerungsmodell (12) der Entwicklungsplattform die Schritte
- Erzeugen einer Zwischendarstellung aus dem graphischen Steuerungsmodell (12),
- Optimieren der erzeugten Zwischendarstellung, und
- Erzeugen des Steuerungsprogrammes (14) für die Zielplattform (ES) durch Übersetzen der optimierten Zwischendarstellung,
umfasst, und wenigstens einer der Schritte, ein Berücksichtigen der zielplattformspezifischen Generierungsregeln für Steuerungsprogrammanteile umfasst, die zu denjenigen Blöcken (20) korrespondieren, die auf das Zielspezifizierungsobjekt (26) referenzieren.

10. Verfahren nach einem der vorhergehenden Ansprüche, wobei das Steuerungsprogramm (14) derart erzeugt wird, dass Steuerungsprogrammanteile, die zu denjenigen Blöcken (20) korrespondieren, die auf das Zielspezifizierungsobjekt (26) referenzieren, Informationen zum Erzeugen des ausführbaren Codes umfassen.

11. Verfahren nach einem der Ansprüche 1 bis 10, wobei die Zielplattform (ES) eine heterogene Hardware (MCR) mit mehreren Komponenten (38, 40) umfasst und wobei das Steuerungsprogramm (14) derart erzeugt wird, dass Steuerungsprogrammanteile, die zu denjenigen Blöcken (20) korrespondieren, die auf das Zielspezifizierungsobjekt (26) referenzieren, an die Komponenten (38, 40) angepasste Anweisungen zur Ausführung umfassen.

12. Verfahren zum Konfigurieren einer als Steuergerät (ES) ausgestalteten Zielplattform (ES), wobei die Zielplattform (ES) wenigstens eine Recheneinheit (38, 40) umfasst und bevorzugt wenigstens einen Sensor und/oder Aktor aufweist, um Daten eines physikalischen Prozesses zu erfassen und/oder auf einen physikalischen Prozess einzuwirken, umfassend die Schritte:
- Einlesen eines graphischen Steuerungsmodell (12) einer Entwicklungsplattform,
- Erzeugen eines Steuerungsprogrammes (14) für die Zielplattform aus dem eingelesenen graphischen Steuerungsmodell (12) nach dem Verfahren nach einem der vorhergehenden Ansprüche,
- Erzeugen eines für die Recheneinheit (38, 40) der Zielplattform (ES) ausführbaren Codes durch Kompilieren des erzeugten Steuerungsprogrammes (14),
- Übertragen des erzeugten ausführbaren Codes auf die Zielplattform (ES) und/oder Hinterlegen des erzeugten ausführbaren Codes auf einem nicht-flüchtigen Speicher der Zielplattform (ES) und/oder Ausführen des erzeugten ausführbaren Codes durch die Recheneinheit (38, 40) der Zielplattform (ES).

13. Verfahren nach dem vorherigen Anspruch, wobei der Schritt Erzeugen des Steuerungsprogrammes (14) für die Zielplattform (ES) nach dem Verfahren nach Anspruch 10 durchgeführt wird und bei dem Schritt des Erzeugens des für die Recheneinheit (38, 40) der Zielplattform (ES) ausführbaren Codes durch Kompilieren des erzeugten Steuerungsprogrammes (14), die Informationen zum Erzeugen des ausführbaren Codes berücksichtigt werden.

14. Vorrichtung zur Datenverarbeitung (10) umfassend Mittel zur Ausführung des Verfahrens nach einem der Ansprüche 1 bis 11.

15. Computerprogrammprodukt umfassend Befehle, die bei der Ausführung des Programms durch einen Computer diesen veranlassen, das Verfahren nach einem der Ansprüche 1 bis 11 auszuführen.
